# EUROPÄISCHE PATENTANMELDUNG

(11) **EP 3 967 577 A1**
(43) Veröffentlichungstag der Anmeldung: **16.03.2022**
(21) Anmeldenummer: 21194557.1
(22) Anmeldetag: 02.09.2021
(51) Int. Cl.: B62D 15/02, G01C 21/26, G08G 1/14, G08G 1/16

(54) **VERFÜGBARKEITSANZEIGE FÜR PARKASSISTENZFUNKTION PER LENKMOMENTENAUFPRÄGUNG**

(30) Priorität: 15.09.2020 DE 102020211548
(71) Anmelder: VOLKSWAGEN AG, 38440 Wolfsburg (DE)
(72) Erfinder: Seeland, Jana, 38448 Wolfsburg (DE); Göricke, Bastian, 38446 Wolfsburg (DE); Radimirsch, Dr. Markus, 31311 Uetze (DE)

(57) **Zusammenfassung**

Die Erfindung betrifft ein Kraftfahrzeug (10) und ein Verfahren zum Betreiben eines Kraftfahrzeugs (10) für das Ausführen eines Parkvorgangs, wobei das Kraftfahrzeug (10) wenigstens eine Parkassistenzfunktion aufweist und wobei das Verfahren umfasst:
- Signalisieren einer Verfügbarkeit einer Unterstützung durch die Parkassistenzfunktion durch zumindest temporäres aktorisches Aufprägen wenigstens eines an einer Lenkhandhabe (12) wahrnehmbaren Lenkmoments, wobei das Lenkmoment als ein Zusatzlenkmoment aufgeprägt wird, das in Richtung einer Parklücke (30) wirkt.

## Beschreibung

Die Erfindung betrifft ein Verfahren zum Betreiben eines Kraftfahrzeugs und ein Kraftfahrzeug. Insbesondere betrifft die Erfindung eine Lösung zum haptischen Anzeigen bzw. Signalisieren der Verfügbarkeit einer Unterstützung durch eine Parkassistenzfunktion. Das Kraftfahrzeug kann insbesondere ein Personenkraftwagen oder ein Lastkraftwagen sein.

Derzeit sind Fahrzeuge am Markt erhältlich, bei denen ein Fahrer während eines Parkvorgangs zumindest teilweise autonom unterstützt werden kann. Insbesondere ist eine autonome Querführung (d.h. Lenkung) von Fahrzeugen im Rahmen eines Parkvorgangs bekannt. Es existieren auch Lösungen, bei denen zusätzlich eine autonome Längsführung möglich ist und/oder bei denen der Fahrer lediglich eine Gangschaltung betätigen muss, das Lenken und Beschleunigen während des Parkvorgangs aber fahrerautonom durchgeführt wird.

Typischerweise aktiviert ein Fahrer eine Parkplatzsuche oder auch direkt die Parkassistenzfunktion, woraufhin das Fahrzeug mittels Umfeldsensoren nach freien Parklücken sucht. Wurde eine solche erkannt, wird dies einem Fahrer visuell und/oder per Audioausgabe signalisiert. Der Fahrer kann je nach aktiver Parkassistenzfunktion dann den Einparkvorgang zumindest teilautonom ausführen lassen.

Durch das visuelle und/oder akustische Signalisieren besteht das Risiko, dass der Fahrer vom Verkehr abgelenkt wird. Zudem ist es für einen Fahrer nicht immer zweifelsfrei feststellbar, ob ihm lediglich das Erkennen einer Parklücke angezeigt wird oder auch die tatsächliche Verfügbarkeit einer Unterstützung durch eine Parkassistenzfunktion.

Die DE 10 2019 005 180 A1 offenbart für den abweichenden Anwendungsfall eines Notbremsassistenten Möglichkeiten zum Anzeigen einer Verfügbarkeit.

Aus der DE 10 2014 115 334 A1 ist ein Verfahren zum Unterstützen eines Fahrers eines Kraftfahrzeugs beim Einparken in eine Parklücke mittels eines Fahrassistenzsystems bekannt, bei welchem, während der Fahrer das Kraftfahrzeug relativ zu der Parklücke bewegt, mittels einer Sensoreinrichtung des Fahrerassistenzsystems ein Umgebungsbereich erfasst wird.

Durch eine Steuereinrichtung des Fahrerassistenzsystems wird überprüft, ob ein vorbestimmtes Aktivierungskriterium zum Starten eines zumindest semi-autonomen Einparkvorgangs in die Parklücke erfüllt ist, wobei das Unterstützen des Fahrers beim Einparken erfolgt, wenn das Kriterium erfüllt ist. Dabei ist vorgesehen, dass bei Erfülltsein des vorbestimmten Aktivierungskriteriums ein Informationssignal an den Fahrer mittels der Steuereinrichtung ausgegeben wird. Das Informationssignal kann haptisch ausgegeben werden, beispielsweise über entsprechende Aktoren in dem Lenkrad.

Aus der DE 10 2004 055 584 A1 ist eine Einparkhilfe für ein Fahrzeug mit einem Lenkrad und einem Lenkmomenten-Regelungsmodul bekannt, mittels welchem dem Lenkrad ein Lenkmoment aufprägbar ist. Die Einparkhilfe wirkt mit dem Lenkmomenten-Regelmodul zusammen und ein zusätzliches Lenkmoment wird auf das Lenkrad aufgebracht, mittels dem der Fahrer des Fahrzeugs bei einem Einparkvorgang unterstützt wird.

Aus der EP 2 748 052 B1 ist ein Fahrerassistenzsystem eines nicht spurgebundenen Fahrzeugs bekannt, das durch Anlegen eines Lenkmoments an das Lenkrad des Fahrers mittels eines Elektromotors eine richtungsorientierte Lenkempfehlung an den Fahrer gibt.

Es besteht somit ein Bedarf dafür, den Betrieb eines Kraftfahrzeugs mit einer Parkassistenzfunktion zu verbessern, insbesondere in Bezug auf das intuitive und den Fahrer möglichst wenig ablenkende Anzeigen (d.h. Signalisieren) der Verfügbarkeit einer Parkassistenzfunktion.

Diese Aufgabe wird durch die Gegenstände der beigefügten unabhängigen Ansprüche gelöst. Vorteilhafte Weiterbildungen sind in den abhängigen Ansprüchen angegeben.

Die Erfindung sieht allgemein vor, die Verfügbarkeit der Unterstützung durch eine Parkassistenzfunktion (kurz formuliert: die Verfügbarkeit einer Parkassistenzfunktion) mittels einer haptischen Rückmeldung über eine Lenkhandhabe anzuzeigen. Akustische und/oder optische (d.h. visuelle) Ausgaben von Signalen können zusätzlich erfolgen, sind aber nicht zwingend. Zudem wird über die haptische Rückmeldung an der Lenkhandhabe die Wahrscheinlichkeit erhöht, dass der Fahrer etwaige optische oder visuelle Signale nicht mehr als primäre Verfügbarkeitsanzeige wahrnimmt bzw. mit nur einer geringen Wahrscheinlichkeit vom umliegenden Verkehr abgelenkt wird.

Anders ausgedrückt schlägt die Erfindung ein zumindest temporäres aktorisches (d.h. fahrerautonomes) Aufprägen eines an einer Lenkhandhabe wahrnehmbaren Lenkmoments vor. Das Lenkmoment kann beispielsweise impuls-, stoß- oder ruckartig erzeugt werden.

Insbesondere wird ein Verfahren zum Betreiben eines Kraftfahrzeugs für das (oder bei dem) Ausführen eines Parkvorgangs vorgeschlagen, wobei das Kraftfahrzeug wenigstens eine (insbesondere zumindest teilautonome) Parkassistenzfunktion aufweist und wobei das Verfahren umfasst:
- Signalisieren (oder auch Anzeigen, insbesondere haptisches Anzeigen, oder Kenntlichmachen) einer Verfügbarkeit einer Unterstützung durch die Parkassistenzfunktion durch zumindest temporäres aktorisches Aufprägen wenigstens eines an einer Lenkhandhabe wahrnehmbaren Lenkmoments.

Weiter ist vorgesehen, dass das Lenkmoment als ein Zusatzlenkmoment aufgeprägt wird, das in Richtung einer Parklücke wirkt. Anders ausgedrückt kann das Zusatzlenkmoment derart ausgerichtet sein und/oder in eine solche Richtung wirken, dass das Fahrzeug in Richtung der Parklücke lenkbar ist, also darin eingeparkt werden kann. Das Zusatzlenkmoment kann den Lenkwiderstand reduzieren und/oder eine Lenkhandhabe aktiv bewegen.

In diesem Fall ist zumindest die Richtung des aktorisch aufgeprägten Lenkmoments nicht unbedingt unabhängig von z.B. der Umgebungssituation. Allerdings kann der Betrag des Zusatzlenkmoments vorbestimmt und situationsunabhängig sein, sodass dies von dem Fahrzeugfahrer als Identifizierung der Verfügbarkeit bzw. Aktivität der Parkassistenzfunktion erkennbar ist. Beispielsweise kann in diesem Zusammenhang vorgesehen sein, dass zumindest bei einem erstmaligen Einlenken zum Einfahren in die Parklücke das Zusatzlenkmoment entsprechend situationsunabhängig aufgeprägt wird, anschließend (beispielsweise nach einem vorbestimmten Zeitintervall) aber situationsabhängig anpassbar ist.

Das Zusatzlenkmoment kann auch unabhängig davon wirken, ob der Fahrer bereits selbst begonnen hat, manuelle Lenkmomente zu erzeugen. Der Begriff Zusatzlenkmoment bringt aber zum Ausdruck, dass dieses prinzipiell dazu vorgesehen ist, auch bei manuell erzeugten Lenkmomenten zu wirken und insbesondere zusätzlich hierzu bzw. gemeinsam hiermit eine gewünschte Lenkaktion (insbesondere in Richtung der Parklücke) zu ermöglichen.

Sofern hierin von dem Anzeigen der Verfügbarkeit gesprochen wird, kann dies nicht zwingend als visuelles Anzeigen verstanden werden, sondern entsprechend als das haptische Anzeigen bzw. Signalisieren über ein vom Fahrer wahrnehmbares Lenkmoment.

Bei der Parkassistenzfunktion kann es sich insbesondere um eine Funktion der vorstehenden Art handeln, wonach das Kraftfahrzeug (im Folgenden auch lediglich als Fahrzeug bezeichnet) fahrerautonom quergeführt und/oder fahrerautonom längsgeführt wird. Es kann sich jedoch auch um eine Parkassistenzfunktion handeln, bei der der Fahrer durch Aufbringen von Zusatzlenkmomenten unterstützt wird, insbesondere durch lediglich temporäres Aufprägen von Zusatzlenkmomenten, beispielsweise um Einschlagpunkte (oder auch Einlenkpunkte) aufzuzeigen. Über Zusatzlenkmomente kann beispielsweise ein Lenkwiderstand gezielt angepasst werden, was der Fahrer als Lenkhinweis wahrnehmen kann.

In an sich bekannter Weise kann die Parkassistenzfunktion durch ein Steuergerät bereitgestellt sein. Dort kann sie in Form einer Softwareapplikation oder auch eines Softwaremoduls hinterlegt sein, die/das bei Ausführen durch eine Prozessoreinrichtung des Steuergeräts das Steuergerät zum Bereitstellen der hierin geschilderten Funktionen veranlasst.

Die Verfügbarkeit einer (Fahrer- bzw. Einpark-)Unterstützung durch die Parkassistenzfunktion kann dann gegeben sein, wenn die Parkassistenzfunktion aktiviert ist. Die Verfügbarkeit kann ferner voraussetzen, dass bestimmte Systemgrenzen oder Bedingungen eingehalten sind, die eine Unterstützung durch die Parkassistenzfunktion ermöglichen. Im Rahmen des Verfahrens kann als ein gesonderter Schritt ermittelt werden, ob die Verfügbarkeit besteht.

Das Verfahren kann ferner als eine gesonderte Maßnahme einen Einparkwunsch des Fahrers erfassen und/oder den Beginn eines Einparkvorgangs. Hierzu kann beispielsweise ermittelt werden, dass eine Parklücke mittels bekannter Ansätze aus dem Stand der Technik erkannt wurde. Hält der Fahrer daraufhin das Fahrzeug an und/oder legt dieser einen Rückwärtsgang ein, kann auf den Beginn eines Parkvorgangs bzw. Vorliegen eines Parkwunsches des Fahrers geschlossen werden. Dann kann die Verfügbarkeit der Parkassistenzfunktion überprüft werden und kann dies einem Fahrer angezeigt werden. Prinzipiell kann auch bereits unmittelbar bei Erkennen einer Parklücke die Verfügbarkeit der Parkassistenzfunktion in der hierin geschilderten Weise signalisiert werden und kann dann, wenn der Fahrer das Fahrzeug anhält und insbesondere einen Rückwärtsgang einlegt, die Parkassistenzfunktion aktiviert werden.

Das aktorische Aufprägen kann mittels eines mit der Lenkhandhabe zumindest mittelbar mechanisch gekoppelten Aktors erfolgen. Hierbei kann es sich insbesondere um einen Elektromotor handeln. Beispielsweise kann es sich um einen Reaktionskraftaktor eines Steer-by-Wire-Lenksystems handeln. Dieser kann mit der Lenkhandhabe gekoppelt sein, um insbesondere entgegen einer Lenkbewegung des Fahrers wirkende Lenkmomente aufzubringen und dadurch ein bestimmtes Lenkgefühl zu vermitteln. Im Falle einer elektromechanischen Lenkung kann es sich bei dem Aktor um einen mit dem Lenkgetriebe gekoppelten Aktor handeln, mit dem beispielsweise eine Zahnstange verlagerbar ist. Aufgrund der in diesem Fall aufrechterhaltenen mechanischen Kopplung zwischen Lenkhandhabe und Lenkgetriebe kann der Aktor somit indirekt auch (beispielsweise durch Verschieben der Zahnstange) Momente auf die Lenkhandhabe aufprägen.

Damit das Lenkmoment an der Lenkhandhabe wahrnehmbar ist, kann es einen geeigneten Mindestwert aufweisen, insbesondere einen solchen, der zu einer zumindest geringfügen Rotation der Lenkhandhabe führt. Entsprechend erforderliche Beträge des Lenkmoments können vorab ermittelt werden, beispielsweise experimentell, per Simulation oder per Berechnung.

Bevorzugt wird das aufgeprägte Lenkmoment zur Verfügbarkeitsanzeige in einer vorbestimmten Weise erzeugt. Beispielsweise kann es stets denselben Betrag oder denselben zeitlichen Verlauf aufweisen. Insbesondere kann es auch (z.B. über mehrere Einparkvorgänge hinweg betrachtet) wiederholbar erzeugt werden. Aus Sicht des Fahrers kann hierdurch das entsprechende Lenkmoment (oder auch der Lenkmomentenverlauf) als eindeutiges Signal zum Anzeigen der Verfügbarkeit der Parkassistenzfunktion erkannt werden. Dies unterscheidet sich z.B. von dem Fall, dass eine zumindest teilautonome Parkfunktion beginnt, zur Querführung aktorische Lenkmomente zu erzeugen. Diese hängen typischerweise von der aktuellen Fahrsituation und insbesondere dem einzustellenden Lenkwinkel ab und besitzen somit aus Sicht des Fahrers keinen Wiedererkennungswert bzw. sind nicht ohne Weiteres als eindeutige Signale zum Anzeigen der Verfügbarkeit einer Parkassistenzfunktion erkennbar.

Entsprechend sieht eine Weiterbildung vor, dass zumindest ein Betrag (optional auch eine Richtung) des Lenkmoments unabhängig von einem aktuellen Fahrzeugbetriebszustand und/oder einer aktuellen Umgebungssituation (des Fahrzeugs) aufgeprägt wird. Dies unterscheidet sich von dem aktorischen Aufbringen von Lenkmomenten zum Durchführen eines zumindest teilautonomen Parkvorgangs bzw. zur zumindest teilautonomen Querführung des Fahrzeugs. In letzterem Fall wird das entsprechende Lenkmoment beispielsweise in Abhängigkeit einer Fahrgeschwindigkeit und/oder von Abständen zu Objekten in der Umgebung jeweils situationsspezifisch angepasst.

Insbesondere kann zumindest ein Betrag (optional aber auch die Richtung) des Lenkmoments unabhängig von einem aktuellen Lenkwinkel der Lenkhandhabe aufgeprägt werden. Erneut kann auf diese Weise sichergestellt werden, dass ein wiedererkennbares Lenkmoment durch den Fahrer an der Lenkhandhabe wahrnehmbar ist, das möglichst eindeutig die Verfügbarkeit der Parkassistenzfunktion signalisiert.

Prinzipiell kann das Zusatzlenkmoment dazu eingerichtet sein, das Fahrzeug fahrerautonom querzuführen. Anders ausgedrückt kann es einen ausreichenden Betrag aufweisen, um ein Fahrzeugrad in einer gewünschten Weise auszulenken. Es ist aber auch möglich, dass das Zusatzlenkmoment vom Betrag her geringer gewählt ist und z.B. je nach aktueller Betriebssituation auch nicht ausreichen kann, um ein Fahrzeugrad unter Überwindung von z.B. Reibungskräften auszulenken. Der Fahrer kann das Zusatzlenkmoment dann insbesondere als ein gegenüber anderen Betriebssituationen verminderten Lenkwiderstand bei manuellem Betätigen der Lenkhandhabe wahrnehmen, beispielsweise da das Zusatzlenkmoment vorhandene Reibungs- oder Rückstellkräfte zumindest teilweise kompensiert.

Anders ausgedrückt kann mit dem Zusatzlenkmoment also ein aus Sicht des Fahrers existierender Lenkwiderstand zumindest temporär herabgesetzt werden, insbesondere bezüglich Auslenkungen in Richtung der Parklücke. Hingegen kann ein Lenkwiderstand zusätzlich oder alternativ für weg von der Parklücke gerichtete Auslenkungen gleich bleiben bzw. nicht herabgesetzt werden. Hierfür kann ein der Parklücke entgegengerichtetes Zusatzlenkmoment aufgeprägt werden.

Eine Weiterbildung sieht vor, dass ein vorbestimmter Lenkmomentenverlauf und/oder ein vorbestimmtes Lenkmomentenmuster aufgeprägt wird. In beiden Fällen kann sich dies auf ein zeitliches Verhalten des Lenkmoments bzw. eine zeitliche Variabilität hiervon beziehen. Vorteilhaft ist dies dahingehend, als dass (wie auch bei nachstehenden impulsartigen oder ruckartigen Lenkmomenten) der Fahrer auch bei noch nicht einsetzender aktiver manueller Auslenkung bereits eine haptische Rückmeldung seitens der Lenkhandhabe erhalten kann. Beispielsweise kann der Lenkmomentenverlauf oder das Lenkmomentenmuster eine schnell aufeinanderfolgende links-rechts-Bewegung der Lenkhandhabe verursachen und/oder ein Vibrieren hiervon.

Eine weitere Ausführungsform sieht vor, dass ein impulsartiges (und/oder stoßartiges) oder ruckartiges Lenkmoment aufgeprägt wird. Hierbei kann es sich um eine steil ansteigende Erhöhung eines aktorisch erzeugten Lenkmoments (vorzugsweise ausgehend von null) handeln, insbesondere bis zu einem vorbestimmten Schwellenwert. Anschließend kann das Lenkmoment vorzugsweise umgehend wieder abgesenkt werden. Ein entsprechend impuls- bzw. ruckartiges Lenkmoment, aber auch die vorstehend genannten Muster und Verläufe, besitzen ein hohes Wiedererkennungspotential aus Sicht des Fahrers, da sie sich von gewöhnlichen an der Lenkhandhabe wahrnehmbaren Rückmeldungen und/oder im Rahmen einer autonomen Querführung aktorisch erzeugten Lenkmomenten signifikant unterscheiden können.

Vorteilhafterweise wirkt das impulsartige oder ruckartige Lenkmoment in Richtung einer Parklücke. Anders ausgedrückt ist dies derart ausgerichtet oder vorzeichenbehaftet, dass das Fahrzeug hierdurch in Richtung der Parklücke lenkbar ist.

Eine Weiterbildung sieht vor, dass eine Konfigurationsmöglichkeit bereitgestellt wird, mittels der der Fahrer das Anzeigen bzw. das Signalisieren der Parkassistenzfunktion nach einem der vorangehenden Ansprüche an wenigstens eine konfigurierbare Bedingung knüpfen kann. Die Bedingung kann insbesondere ortsabhängig sein. Die Konfigurationsmöglichkeit kann z.B. über ein vom Nutzer aufrufbares Einstellungsmenü im Fahrzeug (insbesondere aufruf- und/oder betätigbar über ein Infotainmentsystem) bereitgestellt werden. Mittels der Konfigurationsmöglichkeit kann der Fahrer die Möglichkeit besitzen, das Signalisieren der Parkassistenzfunktion nach jeglichem hierin geschilderten Aspekt nur in bestimmten Situationen durchzuführen. Insbesondere kann auch konfiguriert werden, dass in ersten Situationen (bzw. bei ersten Bedingungen) ein Signalisieren gemäß einem ersten der hierin geschilderten Aspekte stattfindet und in zweiten Situationen (bzw. bei zweiten Bedingungen) ein Signalisieren gemäß einem zweiten, andersartigen Aspekt. Anders ausgedrückt kann der Fahrer über die Konfigurationsmöglichkeit also bevorzugt vorgeben, in welchen Situationen bzw. bei Erfüllen welcher Bedingungen welche Signalisierungsvarianten der hierin geschilderten Art ausgeführt werden sollen.

Insbesondere kann die Bedingung den Aufenthalt des Kraftfahrzeugs in einem vorbestimmten Gebiet definieren. Das Gebiet kann z.B. durch GPS-Koordinaten definiert sein und/oder durch Abstände zu einem vorbestimmten Ort. Hierdurch kann z.B. konfigurierbar sein, dass in der Nähe zu einem häufig frequentierten Ort (beispielsweise einem Wohnort oder Arbeitsort) das Signalisieren der Verfügbarkeit der Parkassistenzfunktion unterbunden ist, falls dort z.B.

Privatparkplätze für den Fahrer vorhanden sind, für deren Auffinden und/oder Einparken er keine Assistenz benötigt.

Zusätzlich oder alternativ kann als eine Bedingung der Aufenthalt des Kraftfahrzeugs in einer vorbestimmten Art von Umgebung definiert sein. Hierbei können vorauswählbare Arten von Umgebungen definiert und/oder hinterlegt sein. Beispielsweise kann die Umgebung eine Art der befahrenen Straße und/oder der Verkehrssituation definieren. Beispielweise kann der Fahrer auf diese Weise vorgeben, dass auf viel befahrenen Straßen (insbesondere mehrspurigen Straßen) keine oder andere Signalisierungen der Verfügbarkeit erfolgen sollen als in Parkhäusern oder auf öffentlichen Parkplätzen (z.B. von einem Supermarkt). Insbesondere können in einer vielbefahrenen Umgebung (z.B. auf entsprechend mehrspurigen Straßen) Verfügbarkeitssignalisierungen mittels impulsartiger Lenkmomente als störend oder sicherheitskritisch empfunden werden. Stattdessen können dort den Lenkwiderstand verringernde Zusatzlenkmomente bevorzugt sein oder kann gänzlich auf eine haptische Anzeige verzichtet werden. In Parkhäusern oder auf öffentlichen Parkplätzen kann Umgekehrtes gelten und eine besonders deutliche Verfügbarkeitsanzeige mittels impulsartiger Lenkmomente bevorzugt werden.

Zusätzlich oder alternativ kann die Bedingung den Aufenthalt des Kraftfahrzeugs an oder nahe zu einem aktuellen Navigationsziel definieren. Die Nähe zu dem Navigationsziel kann definierbar sein, beispielsweise in Form eines vorbestimmten Maximalabstandes (z.B. nicht mehr als 1 km). Insbesondere kann auf diese Weise vorgegeben werden, dass das Signalisieren der Parkassistenzfunktion nur bei entsprechender Nähe zum Navigationsziel erfolgen soll, nicht aber außerhalb hiervon, da dann vermutlich kein Einparkwunsch besteht.

Durch obige beispielhafte Bedingungen kann jeweils eine Ortsabhängigkeit des Signalisierens definiert werden.

Eine Weiterbildung sieht vor, dass das Lenkmoment in einer definierten Richtung wirkt, (insbesondere in Richtung einer Parklücke, wie vorstehend erläutert) und ermittelt wird, ob der Fahrer ein manuelles Lenkmoment in derselben Richtung erzeugt. Wenn dies der Fall ist, wird vorzugsweise die Parkassistenzfunktion zwecks Unterstützung aktiviert, d.h. erzeugt diese z.B. autonome Lenkmomente. Anders ausgedrückt kann die Parkassistenzfunktion also erst dann zugeschaltet werden und insbesondere fahrerautonom unterstützende Lenkmomente erzeugen, wenn der Fahrer dem anfänglichen Lenkmoment zur Verfügbarkeitssignalisierung folgt. Insbesondere kann also das anfängliche Lenkmoment als Lenkempfehlung in die entsprechende Richtung dienen und nur dann, wenn der Fahrer diese Lenkempfehlung befolgt, kann die Parkassistenzfunktion zugeschaltet werden. Folgt der Fahrer dieser Lenkempfehlung nicht, kann hingegen die Parkassistenzfunktion deaktiviert bleiben oder keine fahrerautonomen Lenkmomente erzeugen.

Die Erfindung betrifft auch ein Kraftfahrzeug, aufweisend:
- eine Lenkhandhabe;
- einen mit der Lenkhandhabe gekoppelten Aktor (insbesondere einen Elektromotor der vorstehend geschilderten Art);
- ein Steuergerät, das dazu eingerichtet ist, bei Verfügbarkeit einer Unterstützung durch eine Parkassistenzfunktion den Aktor zum zumindest temporären Aufprägen wenigstens eines an der Lenkhandhabe wahrnehmbaren Lenkmoments anzusteuern.

Wie geschildert, kann das Steuergerät wenigstens eine Prozessoreinrichtung und wenigstens eine Speichereinrichtung umfassen. Auf der Speichereinrichtung kann die Parkassistenzfunktion beispielsweise in Form einer Software-Applikation hinterlegt sein. Bei Ausführen durch die Prozessoreinrichtung kann das Steuergerät daraufhin die Funktionen der Parkassistenzfunktion bereitstellen und beispielsweise eine fahrerautonome Querführung durchführen.

Allgemein kann das Kraftfahrzeug und insbesondere das Steuergerät dazu eingerichtet sein, ein Verfahren gemäß jeglichem hierin geschilderten Aspekt auszuführen. Insbesondere kann das Steuergerät den Aktor zum Aufbringen von Lenkmomenten in bestimmten Richtungen ansteuern, wie dies vorstehend geschildert wurde. Ferner kann das Steuergerät dazu eingerichtet sein, Bedingungen zu überprüfen, die per Konfiguration vorgegeben und zu erfüllen sind, damit das Signalisieren der Parkassistenz-Verfügbarkeit durch die Aktoransteuerung erfolgen kann.

Das Kraftfahrzeug und insbesondere das Steuergerät kann jegliches weitere Merkmal umfassen, um jegliche hierin geschilderten Verfahrensmaßnahmen, Systemzustände und Funktionen bereitzustellen. Insbesondere können sämtliche Erläuterungen zu und Weiterbildungen von den Verfahrensmerkmalen auch auf die gleichlautenden Merkmale des Kraftfahrzeugs und insbesondere des Steuergeräts zutreffen.

Ausführungsbeispiele der Erfindung werden im Folgenden anhand der beigefügten schematischen Figuren erläutert.
- Fig. 1: zeigt ein Kraftfahrzeug gemäß einem Ausführungsbeispiel, mit dem ein erfindungsgemäßes Verfahren ausführbar ist.
- Fig. 2: zeigt ein Ablaufschema des von dem Kraftfahrzeug aus Fig. 1 ausgeführten Verfahrens.

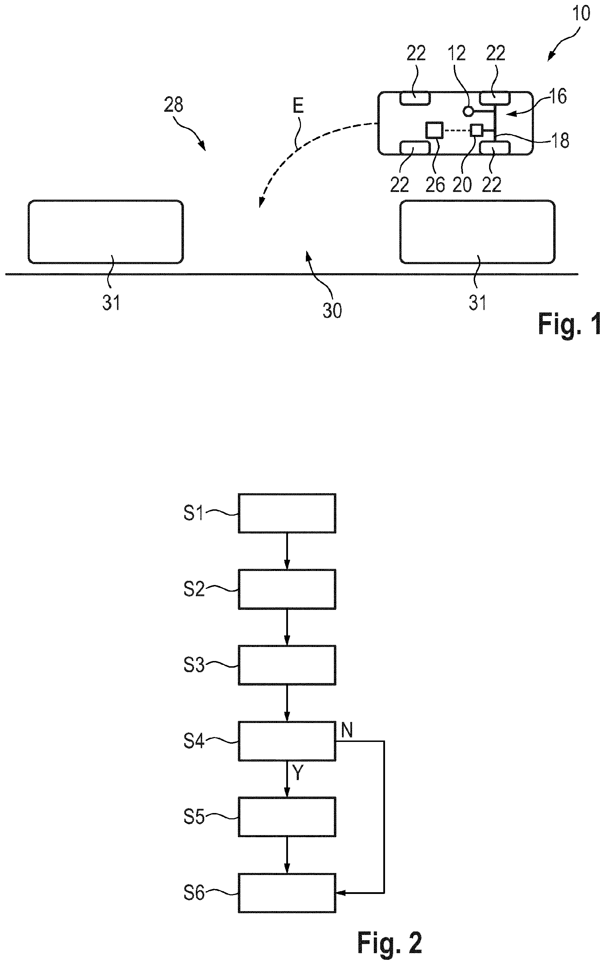

In Fig. 1 ist ein Kraftfahrzeug 10 gemäß einem Ausführungsbeispiel gezeigt. Das Kraftfahrzeug 10 ist stark schematisch vereinfacht und in einer Draufsicht abgebildet. Wesentliche Bestandteile des Kraftfahrzeugs 10 und insbesondere eine Dachkonstruktion hiervon sind aus Darstellungsgründen weggelassen.

Das Kraftfahrzeug 10 umfasst eine Lenkhandhabe 12 in Form eines Lenkrads. Dieses ist mit einem Lenkgetriebe 16 gekoppelt, das u.a. eine linear verlagerbare Zahnstange 18 umfasst. Mit der Zahnstange 18 ist ein Aktor 20 mechanisch gekoppelt, der die Zahnstange 18 verlagern kann. Aufgrund der mechanischen Kopplung zwischen Lenkandhabe 12 und Lenkgetriebe 16 kann der Aktor 20 durch Verlagern der Zahnstange 18 an der Lenkhandhabe 12 wahrnehmbare Momente erzeugen.

Da es sich in dem gezeigten Fall um ein elektromechanisches Lenksystem handelt, wirken die vom Aktor 20 erzeugten Momente stets auch an den Fahrzeugrädern 22 lenkend bzw. können mittels dieser Momente zumindest die Fahrzeugräder 22 der Vorderachse ausgelenkt werden. Es ist aber nicht zwingend, dass aktorisch erzeugte Momente tatsächlich lenkend an den Rädern 22 wirken. Stattdessen kann im Fall eines Steer-by-Wire-Systems auch lediglich per Reaktionskraftaktor ein an der Lenkhandhabe 12 wahrnehmbares Moment erzeugt werden, nicht aber auf das Lenkgetriebe 16 übertragen werden. Auch in diesem Fall wird vorliegend aber von einem Lenkmoment gesprochen, da aus Sicht des Fahrers das entsprechende Moment an der Lenkhandhabe 12 wahrnehmbar ist bzw. die Lenkhandhabe 12 auslenkt.

Das Fahrzeug 10 umfasst ferner ein Steuergerät 26. Dieses ist datenübertragend mit dem Aktor 20 verbunden, wie durch eine gestrichelte Verbindung angedeutet. Das Steuergerät 26 kann auf diese Weise den Aktor 20 ansteuern, damit dieser an der Lenkhandhabe 12 wahrnehmbare Lenkmomente erzeugt, d.h. dort aufprägt.

Bevorzugt ist das Steuergerät 26 an einen nicht gesondert dargestellten Kommunikationsbus (beispielsweise CAN-Bus) des Fahrzeugs 10 angeschlossen. Hierüber kann es beispielsweise jegliche der nachstehend geschilderten Signale erhalten und/oder oder Fahrzeugzustände ermitteln. Im Rahmen des Ausführungsbeispiels ist das Steuergerät 26 dazu eingerichtet, die Parkassistenzfunktion auszuführen und auch eine Parklückenerkennung vorzunehmen. Dies ist aber nicht zwingend und diese Funktionen können auch durch andere Steuergeräte bereitgestellt werden.

In Fig. 1 befindet sich das Fahrzeug 10 auf einer öffentlichen Straße 28 und fährt von links nach rechts. Mittels nicht gesondert dargestellter Umfeldsensoren hat es dabei bereits begonnen, Parklücken im Fahrzeugumfeld zu suchen, insbesondere auf der aus Sicht des Fahrzeugs 10 rechten Fahrbahnseite. Eine entsprechende Parklücke 30 ist in Fig. 1 zwischen zwei parkenden Fahrzeugen 31 markiert. In dem gezeigten Zustand wurde das Fahrzeug 10 nach Erkennen der Parklücke angehalten und der Fahrer signalisiert seinen Lenkwunsch durch Einlegen eines Rückwärtsgangs. Letzteres kann von dem Steuergerät 26 ermittelt werden, beispielsweise als Beginn oder Bevorstehen eines assistierten Einparkvorgangs. Das Steuergerät 26 kann daraufhin optional überprüfen, ob eine Parkassistenzfunktion der hierin geschilderten Art beispielsweise aufgrund aktueller Umgebungs- oder Betriebszustände verfügbar, d.h. aktivierbar ist. Auch wenn eine solche Parkassistenzfunktion aber stets verfügbar bzw. aktivierbar ist (z.B. ohne Überprüfen der Umgebung), kann als eine Bestätigung für den Fahrer die Verfügbarkeit bzw. Ausführbarkeit der Parkassistenzfunktion in der nachstehend geschilderten Weise signalisiert werden.

In Fig. 2 ist ein beispielhaftes Ablaufschema eines Verfahrens gezeigt, das von dem Kraftfahrzeug 10 und insbesondere dessen Steuergerät 26 ausführbar ist. In einem Schritt S1 ist eine Parklücke 30 fahrerautonom erkannt worden und wird optional überprüft, ob eine Parkassistenzfunktion aktuell ausführbar ist, falls deren Ausführbarkeit an Bedingungen geknüpft ist. Als ein weiterer optionaler Schritt S2 wird ferner zunächst überprüft, ob der Fahrer tatsächlich einen Einparkwunsch signalisiert, beispielsweise durch Anhalten des Fahrzeugs 10 und/oder Einlegen eines Rückwärtsgangs. In Schritt S3 wird (sofern verfügbar) die Möglichkeit zur Unterstützung durch die Parkassistenzfunktion signalisiert oder allgemein deren Ausführbarkeit bzw. Verfügbarkeit bestätigt.

Im Gegensatz zum Stand der Technik erfolgt dies nicht rein durch Ausgabe optischer oder akustischer Signale, sondern durch Erzeugen einer haptischen Rückmeldung an der Lenkhandhabe 12. Hierfür erzeugt das Steuergerät 26 ein vorbestimmtes Steuersignal zum Ansteuern des Aktors 20. Der Aktor 20 erzeugt daraufhin ein Moment vorbestimmter Art und überträgt dies auf das Lenkgetriebe 16, woraufhin auch die Lenkhandhabe 12 in vorbestimmter Weise und durch den Fahrer haptisch wahrnehmbar ausgelenkt und/oder deren Lenkwiderstand verändert wird. Bevorzugt erfolgt dabei weder die Steuersignalerzeugung durch das Steuergerät 26 noch die Momentenerzeugung durch den Aktor 20 unter Berücksichtigung aktueller Fahrzeugbetriebszustände, Umgebungszustände oder allgemein ohne Berücksichtigung situationsabhängiger Parameter. Stattdessen wird situationsunabhängig in vorbestimmter Weise ein Lenkmoment oder Lenkmomentenverlauf jeglicher vorstehend geschilderten Art an der Lenkhandhabe 12 erzeugt.

Vorliegend erfolgt dies in der Weise, dass das Lenkmoment in Richtung der Parklücke 30 wirkt, also in Fig. 1 ein Lenken des Fahrzeugs 10 gemäß dem gestrichelt angedeuteten Einparkpfeil E ermöglicht. Insbesondere kann ruckartig in diese Richtung ausgelenkt werden, was der Fahrer als entsprechende Bewegung der Lenkhandhabe 12 haptisch wahrnimmt. Erzeugt er daraufhin ein manuelles Lenkmoment in die entsprechende Richtung, kann eine Querführung des Fahrzeugs 10 zumindest teilautonom ausgeführt werden (optional auch eine Längsführung). Insbesondere können dann zumindest an Einlenkpunkten aktorische Zusatzmomente erzeugt werden, um dem Fahrer ein geeignetes Einlenken bzw. erforderliche Einlenkrichtungen anzuzeigen.

Entsprechend wird im Schritt S4 überprüft, ob der Fahrer der Lenkempfehlung des Schritts S3 in Form des ruckartigen aktorischen Lenkmoments folgt. Ist dies der Fall (Pfeil Y), wird im Schritt S5 die Parkassistenzfunktion aktiviert oder fortgesetzt und erzeugt querführende aktorische Lenkmomente. Ist dies nicht der Fall (Pfeil N), wird unmittelbar zur Beendigung des Verfahrens in Schritt S6 übergegangen, ohne dass die Parkassistenzfunktion gemäß Schritt S5 aktiviert wird und/oder eine autonome Querführung vornimmt.

Nicht gesondert gezeigt ist, dass das Steuergerät in der Weise konfigurierbar ist, dass dort durch den Fahrer Bedingungen der im allgemeinen Beschreibungsteil geschilderten Art hinterlegbar sind, die zur Verfügbarkeitssignalisierung insbesondere mittels ruckartiger Lenkimpulse zu erfüllen sind. Ist eine solche Konfigurationsmöglichkeit vorgesehen, kann im Verfahrensablauf vor dem Schritt S3 auch eine separate Überprüfung erfolgen, ob eine entsprechende Bedingung erfüllt ist oder nicht.

### Bezugszeichenliste

- 10: Kraftfahrzeug
- 12: Lenkhandhabe
- 16: Lenkgetriebe
- 18: Zahnstange
- 20: Aktor
- 22: Fahrzeugrad
- 26: Steuergerät
- 28: Straße
- 30: Parklücke
- 31: parkendes Fahrzeug
- E: Einparkpfad

## Patentansprüche

1. Verfahren zum Betreiben eines Kraftfahrzeugs (10) für das Ausführen eines Parkvorgangs, wobei das Kraftfahrzeug (10) wenigstens eine Parkassistenzfunktion aufweist und wobei das Verfahren umfasst:
- Signalisieren einer Verfügbarkeit einer Unterstützung durch die Parkassistenzfunktion durch zumindest temporäres aktorisches Aufprägen wenigstens eines an einer Lenkhandhabe (12) wahrnehmbaren Lenkmoments, wobei das Lenkmoment als ein Zusatzlenkmoment aufgeprägt wird, das in Richtung einer Parklücke (30) wirkt.

2. Verfahren nach Anspruch 1,
**dadurch gekennzeichnet, dass** zumindest ein Betrag des Lenkmoments unabhängig von einem aktuellen Fahrzeugbetriebszustand und/oder einer aktuellen Umgebungssituation aufgeprägt wird.

3. Verfahren nach Anspruch 2,
**dadurch gekennzeichnet, dass** zumindest ein Betrag des Lenkmoments unabhängig von einem aktuellen Lenkwinkel der Lenkhandhabe (12) aufgeprägt wird.

4. Verfahren nach einem der vorangehenden Ansprüche,
**dadurch gekennzeichnet, dass** ein vorbestimmter Lenkmomentenverlauf und/oder ein vorbestimmtes Lenkmomentenmuster aufgeprägt wird.

5. Verfahren nach einem der vorangehenden Ansprüche,
**dadurch gekennzeichnet, dass** ein impulsartiges oder ruckartiges Lenkmoment aufgeprägt wird, wobei das impulsartige oder ruckartige Lenkmoment in Richtung einer Parklücke (30) wirkt.

6. Verfahren nach einem der vorangehenden Ansprüche,
ferner aufweisend:
- Bereitstellen einer Konfigurationsmöglichkeit, mittels der der Fahrer das Signalisieren der Parkassistenzfunktion nach einem der vorangehenden Ansprüche an wenigstens eine konfigurierbare Bedingung knüpfen kann.

7. Verfahren nach Anspruch 6,
**dadurch gekennzeichnet, dass** die Bedingung eine ist von:
- einem Aufenthalt des Kraftfahrzeugs (10) in einem vorbestimmten Gebiet;
- einem Aufenthalt des Kraftfahrzeugs (10) in einer vorbestimmten Art von Umgebung;
- einem Aufenthalt des Kraftfahrzeugs (10) an oder nahe zu einem aktuellen Navigationsziel.

8. Verfahren nach einem der vorangehenden Ansprüche,
**dadurch gekennzeichnet, dass** das Lenkmoment in einer definierten Richtung wirkt, ermittelt wird, ob der Fahrer ein manuelles Lenkmoment in derselben Richtung erzeugt, und wenn dies der Fall ist, ein Unterstützen durch die Parkassistenzfunktion erfolgt.

9. Kraftfahrzeug (10), aufweisend:
- eine Lenkhandhabe (12);
- einen mit der Lenkhandhabe (12) gekoppelten Aktor (20);
- ein Steuergerät (26), das dazu eingerichtet ist, bei Verfügbarkeit einer Unterstützung durch eine Parkassistenzfunktion den Aktor (20) zum zumindest temporären Aufprägen wenigstens eines an der Lenkhandhabe (12) wahrnehmbaren Lenkmoments anzusteuern, wobei das Lenkmoment als ein Zusatzlenkmoment aufgeprägt wird, das in Richtung einer Parklücke (30) wirkt.
